# EUROPÄISCHE PATENTANMELDUNG

(11) **EP 1 206 956 A2**
(43) Veröffentlichungstag der Anmeldung: **22.05.2002**
(21) Anmeldenummer: 01120381.7
(22) Anmeldetag: 25.08.2001
(51) Int. Cl.: B01D 21/20

(54) **Rundbeckenräumer**

(30) Priorität: 16.11.2000 DE 10056918
(71) Anmelder: Passavant-Roediger Umwelttechnik GmbH, 65322 Aarbergen (DE)
(72) Erfinder: Huth, Robert, 63776 Mömbris (DE); Scheid, Klaus, 65597 Hünfelden (DE)
(74) Vertreter: KEIL & SCHAAFHAUSEN

(57) **Zusammenfassung**

Es wird ein Rundbeckenräumer (1) für Klärbecken (3; 32) mit Belebtschlamm enthaltender Flüssigkeit beschrieben, der einen Räumerarm (2; 37) aufweist, an dem wenigstens ein Räumwerk (4, 5) zum Austragen von Schlamm oder ähnlichem aus dem Klärbecken (3; 32) angeordnet ist. Der Räumerarm (2, 37) ist dabei über eine Antriebseinheit (28; 36) um den Mittelpunkt des Klärbeckens (3; 32) rotierbar. Um die Betriebskosten zu senken, ist vorgesehen, dass die Antriebseinheit (28; 36) eine Steuervorrichtung (29) aufweist, die die Bewegungsrichtung des Räumerarms (2, 37) nach maximal zwei Umdrehungen umkehrt.

## Beschreibung

Die Erfindung betrifft einen Rundbeckenräumer, insbesondere für Klärbecken mit Belebtschlamm enthaltender Flüssigkeit, mit einem Räumerarm, an dem wenigstens ein Räumwerk zum Austragen von Schlamm oder ähnlichem aus dem Klärbecken angeordnet ist, wobei der Räumerarm über eine Antriebseinheit um den Mittelpunkt des Klärbeckens rotierbar ist.

Kommunale und industrielle Abwässer werden in Kläranlagen mechanisch und biologisch gereinigt, um in den Wasserkreislauf zurückgeführt zu werden. Zur biologischen Abwasserreinigung wird u.a. Belebtschlamm eingesetzt, also ein Schlamm, der Mikroorganismen enthält, die das zu klärende Abwasser von Schadstoffen reinigen. Dieser Belebtschlamm muss vor einer Rückführung des Wassers in den Wasserkreislauf wieder aus dem Wasser entfernt werden. Hierzu dienen Klärbecken, in denen Schlammbestandteile mit einem höheren spezifischen Gewicht als Wasser, sogenannte Schwerstoffe, sich am Boden absetzen, während andere Schlammbestandteile mit einem niedrigeren spezifischen Gewicht als Wasser, sogenannte Leichtstoffe, als Schwimmschlamm zur Oberfläche aufsteigen. In diesen Absetzbecken werden Schwer- und Leichtstoffe also durch den Einfluss der Schwerkraft vom Abwasser getrennt, wobei dieses Verfahren sowohl für Vor-, Zwischen- und Nachklärung als auch in Regenklärbecken eingesetzt wird.

Es ist bekannt, in derartigen Becken Räumsysteme einzusetzen, die die Aufgabe haben, den am Boden abgesetzten Schlamm zu einem Schlammsammeltrichter zu fördern und gleichzeitig durch eine Schwimmschlammräumeinrichtung die Wasseroberfläche von Schwimmstoffen freizuhalten. Hierbei muss vermieden werden, dass abgesetzter Schlamm oder Schwimmstoffe wieder aufgewirbelt werden. Derartige Räumsysteme werden an Räumarmen oder Räumbrücken eingesetzt, die in dem Rundbecken kontinuierlich rotieren. Über eine in radialer Richtung gekrümmte Ausgestaltung der Räumsysteme wird erreicht, dass der Schwimmschlamm und der Bodenschlamm entweder zur Mitte des Rundbeckens oder an dessen Rand befördert werden. Dort kann der Schlamm über einen Sammeltrichter, einen Überlauf oder eine Absaugung aus dem Becken befördert werden.

Um Verwirbelungen von Schlamm in dem Becken zu vermeiden, muss der Räumerarm bzw. die Räumerbrücke mit sehr niedrigen Drehzahlen in dem Rundbecken rotieren. Auf diese Weise werden jedoch nur geringe radiale Geschwindigkeitskomponenten des Boden- oder Schwimmschlamms erreicht, so dass der Abtransport des Schlamms nicht effektiv ist. Gerade bei Schwimmschlamm entsteht zudem das Problem, dass schon bei geringen Windstärken eine Schwimmschlammabfuhr nicht mehr ausreichend möglich ist.

Die kontinuierliche Drehbewegung der Räumerarme bzw. Räumerbrücken wird durch einen entweder zentral in der Beckenmitte oder am äußeren Beckenrand angeordneten Antrieb erreicht. Aus konstruktiven Gründen ist der Antrieb am äußeren Beckenrand jedoch häufig unerwünscht, beispielsweise, da dadurch der für das Klärbecken erforderliche Bauraum wächst. Zudem ist es bei einer Positionierung des Antriebs am Beckenrand schwieriger eine Abdeckung über dem Klärbecken vorzusehen, die zur Vermeidung von Geruchsbelästigung in einigen Fällen gefordert ist.

Die Energieversorgung eines in der Beckenmitte angeordneten Räumerarmantriebs sowie der an dem Räumerarm angebrachten Boden- und Schwimmschlammräumer erfolgt über einen Schleifring und Bürsten von der Beckenmitte aus. Die Energieversorgung über einen Schleifring und Bürsten ist jedoch sehr wartungsintensiv, so dass bei derartigen Rundbeckenräumern hohe Betriebskosten durch die Wartung und die damit verbundenen Betriebsstillstände entstehen. Das Auswechseln von Schleifring und/oder Bürsten erfordert zudem, dass die Beckenmitte vom Rand des Klärbeckens aus erreichbar ist. Dies erhöht bei kleinen Anlagen mit nicht notwendigerweise begehbaren Räumerarmen den Konstruktionsaufwand.

Aufgabe der Erfindung ist es daher, einen Rundbeckenräumer der eingangs genannten Art bereitzustellen, der in unterschiedlich großen Klärbecken bei geringen Herstell- und Betriebskosten einsetzbar ist und dabei eine effektive Abfuhr von durch den Einfluss der Schwerkraft vom Abwasser getrennten Schwer- und Leichtstoffen aus dem Becken ermöglicht.

Diese Aufgabe wird im Wesentlichen dadurch gelöst, dass die Antriebseinheit eine Steuervorrichtung umfasst, die die Bewegungsrichtung des Räumerarms nach maximal zwei Umdrehungen umkehrt. Dadurch wird es möglich, die Antriebseinheit des Räumerarms sowie ggf. den Boden- und/oder Schwimmschlammräumer unabhängig von einem Schleifring und Bürsten mit Energie zu versorgen. Der gesamte Rundbeckenräumer verursacht so durch die längeren Wartungs- und Instandhaltungsintervalle deutlich niedrigere Betriebskosten. Betriebsstillstände aufgrund von Wartungsarbeiten können vermieden werden. Zudem kann der Konstruktionsaufwand verringert werden, wodurch eine kostengünstigere Herstellung möglich ist, da der Räumerarm nicht zwangsweise begehbar gestaltet werden muss.

Vorzugsweise kehrt die Steuervorrichtung die Bewegungsrichtung des Räumerarms nach näherungsweise einer Umdrehung um. Auf diese Weise kann das gesamte Klärbecken durch den Räumerarm mit wechselnder Drehrichtung gereinigt werden, ohne dass eine Energieübertragung mittels Schleifring und Bürsten vorgesehen werden muss.

Nach einer bevorzugten Ausführungsform der Erfindung ist vorgesehen, dass die Steuervorrichtung eine elektronische Steuerung zur Umkehr der Drehrichtung des Räumerarms umfasst. Die Rotation des Räumerarms ist somit exakt steuerbar und die Anzahl der Umdrehungen des Räumerarms bis zur Richtungsumkehr der Bewegung ist frei wählbar. Elektronische Steuerungen lassen sich einfach in den Rotationsantrieb eines Räumerarms integrieren.

Alternativ hierzu kann die Steuervorrichtung auch eine mechanische Steuerung zur Umkehr der Drehrichtung des Räumerarms umfassen. Eine mechanische Steuerung weist den Vorteil einer hohen Lebensdauer bei geringen Wartungs- und Herstellkosten auf.

Erfindungsgemäß ist vorgesehen, dass an dem Räumerarm ein Bodenräumwerk und ein Schwimmschlammräumwerk angeordnet sind. Schwer- und Leichtstoffe, die sich von dem Wasser durch den Einfluss der Schwerkraft getrennt haben, lassen sich auf diese Weise besonders wirkungsvoll aus dem Klärbecken zu einer Schlammsammeleinrichtung transportieren. Durch den erfindungsgemäßen Rundbeckenräumer kann so eine hohe Reinigungsleistung mit jeder Umdrehung des Räumerarms unabhängig von seiner Drehrichtung erzielt werden.

Weiterhin ist vorgesehen, dass das Bodenräumwerk und das Schwimmschlammräumwerk Bandräumer mit in radialer Richtung des Klärbeckens umlaufenden Räumschilden aufweisen. Bandräumer eignen sich besonders gut zur Abfuhr von Schlamm, der sich am Beckenboden oder an der Wasseroberfläche in dem Klärbecken abgesetzt hat. Durch die umlaufenden Räumschilde der Bandräumer kann ein sehr zielgerichteter Transport zur Beckenmitte oder zum Beckenrand erfolgen, wobei durch geeignete Wahl der Rotationsgeschwindigkeit des Räumerarmes und der Bandräumer sichergestellt werden kann, dass bei jedem Umlauf des Räumerarmes die gesamte Beckenfläche durch die Bandräumer überstrichen wird.

Der Rundbeckenräumer arbeitet besonders wirtschaftlich, wenn das Bodenräumwerk und das Schwimmschlammräumwerk durch einen gemeinsamen Bandräumer gebildet werden. Am Beckenboden arbeitet der Bandräumer als Bodenräumwerk, während er gleichzeitig an der Flüssigkeitsoberfläche als Schwimmschlammräumwerk betätigt wird. Mit einem vollständigen Umlauf des Bandräumers wird somit sowohl der Beckenboden als auch die Flüssigkeitsoberfläche von Schlamm befreit

Es wird bevorzugt, dass die Bandräumer zweigeteilte Räumschilde aufweisen, zwischen denen jeweils ein Schottblech angeordnet ist, das mit den Räumschilden einen Winkel von etwa 90° bildet. Ein derartiges Schottblech kann verhindern, dass von den Räumschilden transportierter Schlamm aufgrund der Rotationsbewegung der an dem Räumerarm befestigten Bandräumer nicht vollständig zum Beckenrand oder zur Beckenmitte transportiert werden. Die Schottbleche schließen dabei vorzugsweise bündig an die einzelnen Räumschilde der Bandräumer an und bilden mit den Räumschilden jeweils einen den Schlamm transportierenden Winkel, so dass ein Austreten von Schlamm zwischen dem Räumschild und dem Schottblech vermieden werden kann.

Nach einer weiteren Ausführungsform der Erfindung ist es vorgesehen, dass die Antriebseinheit und/oder die Räumwerke über wenigstens eine in der Mitte des Klärbeckens angeordnete flexible Leitung mit einer Energiequelle verbunden sind. Diese flexible Leitung kann beispielsweise ein Kabel sein, das eine Länge aufweist, die es dem Räumerarm ermöglicht eine oder mehr Umdrehungen in dem Klärbecken zu machen, bevor das Kabel gespannt wird. Die Energieversorgung der Räumwerke und des Räumerarmantriebs wird auf diese Weise konstruktiv einfach und wartungsarm gestaltet, so dass die Betriebs- und Herstellungskosten des erfindungsgemäßen Rundbeckenräumers niedrig gehalten werden können.

Eine besonders bevorzugte Ausführungsform sieht vor, dass das Bodenräumwerk und das Schwimmschlammräumwerk einen gemeinsamen Antrieb aufweisen. Dadurch können die Herstellungskosten für einen Rundbeckenräumer gesenkt werden. Gleichzeitig kann die Funktion des Bodenräumwerks bei laufendem Schwimmschlammräumwerk leicht festgestellt werden, ohne den Betrieb zu unterbrechen.

Die Anzahl der Antriebskomponenten kann nochmals deutlich reduziert werden, indem die Antriebseinheit des Räumerarms gleichzeitig das Bodenräumwerk und das Schwimmschlammräumwerk antreibt. Dies kann beispielsweise über ein Getriebe realisiert werden, das bei Rotation des Räumerarmes um die Beckenmitte diese Drehbewegung in eine radiale Bewegung des Bandräumers umsetzt. Durch den Einsatz eines einzigen Antriebsmotors können die Herstellungskosten des Rundbeckenräumers weiter minimiert werden.

Es wird bevorzugt, dass der Räumerarm aus einem modularen Stabfachwerk besteht. Mit geringen konstruktiven Änderungen kann der erfindungsgemäße Rundbeckenräumer damit in Rundbecken unterschiedlichen Durchmessers und unterschiedlicher Höhe eingesetzt werden. Durch die modulare Bauweise werden die Herstell- und Konstruktionskosten gesenkt. Insbesondere werden auch die Transportkosten durch einen modularen Aufbau aus einzelnen Stabelementen auf ein Minimum reduziert, wobei der Rundbeckenräumer erst am Einsatzort montiert wird. Weiterhin ist es auch möglich, einzelne Module zu Reparaturzwecken auszutauschen oder bestehende Anlagen durch neue Module auf- oder umzurüsten. An einem derartigen modularen Stabfachwerk können zudem neben Boden- und Schwimmschlammräumwerken auch weitere Funktionselemente angebracht werden, wie beispielsweise Geräte zum Einbringen von Sauerstoff in das Abwasser.

Das Gewicht des Räumerarms kann ohne Belastung des Antriebs aufgenommen werden, indem der Räumerarm am Beckenboden auf Führungsrollen gelagert ist, die dem Bodenräumwerk nachlaufen. Eine kostenintensive Bereitstellung einer gesonderten Laufschiene am Beckenrand entfällt somit. Dies erleichtert auch das Vorsehen einer Abdeckung des Beckens, die zur Vermeidung einer Geruchsbelästigung der Umgebung vielfach vorgeschrieben wird.

In Weiterbildung der Erfindung ist es vorgesehen, dass der Räumerarm als Doppelbrücke ausgebildet ist, die den gesamten Durchmesser des Klärbeckens überspannt. Bei der zur Vermeidung von Verwirbelungen vorgegebenen langsamen Rotationsgeschwindigkeit des Räumerarms kann durch die Ausbildung als Doppelbrücke erreicht werden, dass der Abtransport von Schwimm- und/oder Bodenschlamm effektiver gestaltet wird.

Die Erfindung wird nachfolgend anhand von Ausführungsbeispielen und der Zeichnung näher erläutert.

Es zeigen:
- Fig. 1: eine schematische Seitenansicht eines erfindungsgemäßen Rundbeckenräumers nach einer ersten Ausführungsform,

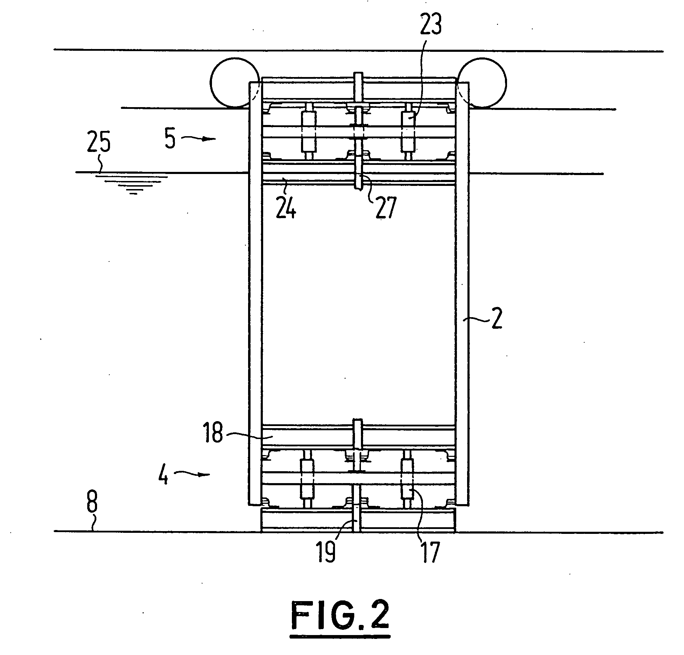

- Fig. 2: eine vergrößerte Darstellung eines Schnitts entlang der Linie II-II in Fig. 1 und
- Fig. 3: eine schematische Seitenansicht eines erfindungsgemäßen Rundbeckenräumers nach einer zweiten Ausführungsform.

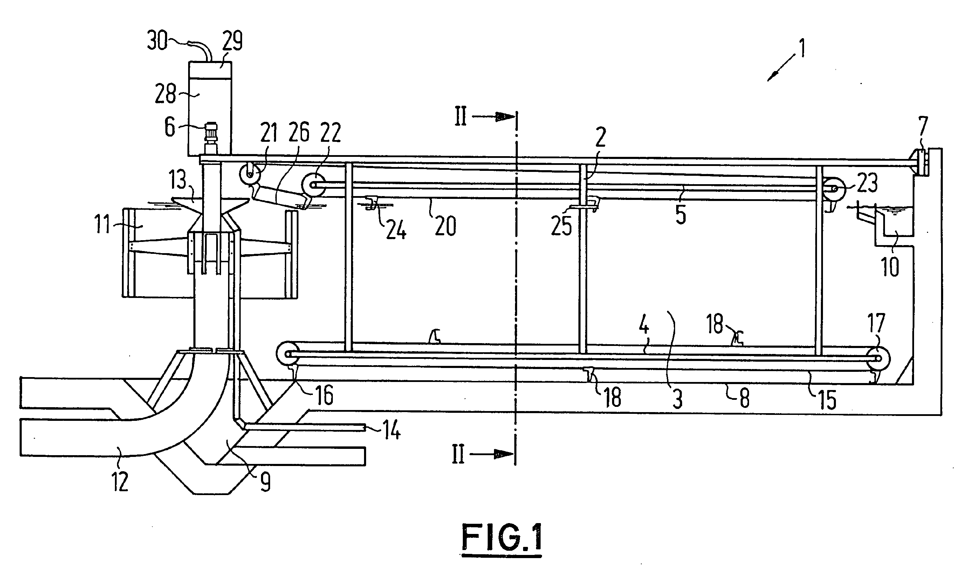

Der in Fig. 1 dargestellte Rundbeckenräumer 1 weist einen Räumerarm 2 auf, der im Wesentlichen die Hälfte eines runden Klärbeckens 3 überspannt. An dem Räumerarm 2 sind ein Bodenräumwerk 4 und ein Schwimmschlammräumwerk 5 ausgebildet. Der Räumerarm 2 ist in der Mitte des Klärbeckens 3 durch ein zentrales Lager 6 und an dem äußeren Rand des Klärbeckens 3 durch ein Lager 7 so gelagert, dass der Räumerarm 2 in dem Klärbecken 3 rotieren kann. Hierzu ist ein in der Figur nicht dargestellter Antrieb vorgesehen, der entweder in der Beckenmitte oder an dem Lager 7 ausgebildet sein kann.

Das runde Klärbecken 3 weist einen Beckenboden 8 auf, der zur Beckenmitte hin in einen Schlammsammeltrichter 9 mündet. An dem äußeren Rand des Klärbeckens 3 ist ein Überlauf 10 ausgebildet, durch den gereinigtes Wasser aus dem Klärbecken 3 abfließen kann. Über einen zentral in dem Klärbecken 3 angeordneten Wassereinlauf 11 wird dem Klärbecken 3 zu reinigendes Abwasser aus einer Abwasserzulaufleitung 12 zugeführt. Oberhalb des Wassereinlaufs 11 ist ein zweiter Schlammsammeltrichter 13 vorgesehen, über den Schlamm durch eine Leitung 14 abgeführt werden kann.

Das Bodenräumwerk 4 des Räumerarms 2 ist durch einen Bandräumer 15 gebildet, der ein um zwei Umlenkrollen 16 und 17 umlaufendes Band aufweist. An dem Band sind mehrere Räumschilde 18 befestigt, die so an dem Band um die Umlenkrollen 16 und 17 umlaufen, dass sie auf einem ersten Pfad entlang des Beckenbodens von außen zur Mitte des Klärbeckens hin bewegt werden und auf einem zweiten Pfad von der Mitte des Klärbeckens nach außen zurücktransportiert werden. Entlang des ersten Pfades liegen die Räumschilde 18 näherungsweise an dem Beckenboden 8 an, so dass nur ein minimaler Spalt zwischen dem Beckenboden 8 und dem Räumschild 18 verbleibt. Über einen an einer der beiden Umlenkrollen 16 oder 17 angeordneten, nicht dargestellten Antrieb wird der Bandräumer 4 angetrieben.

Die Räumschilde 18 sind zweigeteilt und weisen in ihrer Mitte ein Schottblech 19 auf. Das Schottblech 19 erstreckt sich dabei im Wesentlichen senkrecht zu den Räumschilden 18. Somit kann unabhängig von der Drehrichtung des Räumerarms 2 zwischen dem Schottblech 19 und einer der beiden Hälften des Räumschilds 18 ein Winkel gebildet werden, in dem der Schlamm durch das Klärbecken 3 transportiert wird.

Das Schwimmschlammräumwerk 5 umfasst ebenfalls einen Bandräumer 20, der ein Band aufweist, das um Umlenkrollen 21, 22 und 23 geführt wird. An dem umlaufenden Band sind dabei mehrere zweigeteilte Räumschilde 24 angeordnet. Die Räumschilde 24 werden dabei auf einem ersten Pfad von der Außenseite des Klärbeckens 3 zu dessen Mitte hin bewegt, wobei die Räumschilde 24 teilweise in die Oberfläche 25 der in dem Klärbecken 3 enthaltenen Flüssigkeit eintauchen. Auf einem weiteren Pfad, der sich zwischen der Umlenkrolle 22 und der Umlenkrolle 21 erstreckt, werden die Räumschilde 24 auf einer Rampe 26 aus dem Wasser gehoben. Die Rampe 26 mündet in den Schlammsammeltrichter 13. Auf einem zweiten Pfad werden die Räumschilde 24 zwischen der Umlenkrolle 21 und der Umlenkrolle 23 außerhalb der Flüssigkeit wieder an den Beckenrand zurücktransportiert.

Die zweigeteilten Räumschilde 24 weisen in ihrer Mitte ein Schottblech 27 auf, das sich dabei im Wesentlichen senkrecht zu den Räumschilden 24 erstreckt. Wie oben erläutert, kann somit unabhängig von der Drehrichtung des Räumerarms 2 zwischen dem Schottblech 27 und einer der beiden Hälften des Räumschilds 24 Schlamm durch das Klärbecken 3 transportiert werden.

An dem zentralen Lager 6 des Räumerarms 2 ist eine schematisch dargestellte Antriebseinheit 28 angeordnet, die eine Steuervorrichtung 29 zur Steuerung der Drehrichtung des Räumerarms 2 in dem Klärbecken 3 aufweist. Über ein Kabel 30 werden die Antriebseinheit 28 sowie die Antriebe der Bandräumer 15 und 20 mit Energie versorgt. Das Kabel 30 weist dabei eine Länge auf, die es dem Räumerarm 2 ermöglicht, mehr als eine ganze Umdrehung in dem Klärbecken 3 zu rotieren, bevor das Kabel 30 gestrafft wird. Vor einer zu starken Spannung des Kabels 30 kehrt die Steuervorrichtung 29 die Bewegungsrichtung des Räumerarms 2 um.

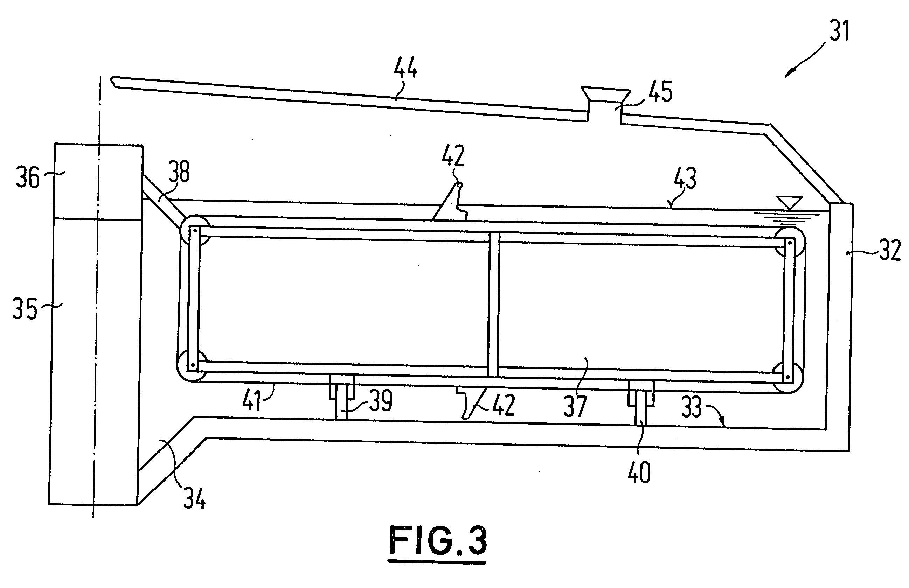

Eine zweite Ausführungsform eines Rundbeckenräumers 31 ist in Figur 3 schematisch in einem Klärbecken 32 dargestellt. Das Klärbecken 32 ist mit einem im Wesentlichen flachen Boden 33 ausgestattet, der zur Beckenmitte hin in einen Schlammsammeltrichter 34 mündet. Ein weiterer Schlammsammeltrichter sowie ein Ablauf für gereinigtes Wasser, wie beispielsweise ein getauchtes Auslaufrohr, können in dem Klärbecken 32 vorgesehen sein. In einem Mittelbauwerk 35 sind ein Wassereinlauf sowie eine Antriebseinheit 36 mit integrierter Steuervorrichtung angeordnet, über die, wie oben erläutert, die Bewegungsrichtung des Rundbeckenräumers umkehrbar ist.

Ein Räumerarm 37 ist als Fachwerk modular aus einzelnen Stäben zusammengesetzt und über einen Arm 38 mit der Antriebseinheit 36 verbunden. Der Räumerarm 37 ist auf Führungsrollen 39 und 40 gelagert, die auf dem Boden 33 des Klärbeckens 32 laufen.

Um den Räumerarm 37 läuft ein Bandräumer 41 mit mehreren Räumschilden 42, die mit dem Räumerarm 37 nachlaufenden Schottblechen (in Figur 3 nicht gezeigt) ausgestattet sind. Die Räumschilde 42 werden dabei entlang des Beckenbodens 33 von außen zur Mitte des Beckens 32 hin bewegt, in der Beckenmitte vertikal nach oben geleitet, entlang der Oberfläche 43 der Flüssigkeit von der Mitte des Klärbeckens 32 nach außen und schließlich am Beckenrand vertikal nach unten zurückgeführt. Schlamm, der sich am Boden 33 des Beckens 32 abgesetzt hat, wird so durch den Bandräumer 41 zu dem Schlammsammeltrichter 34 gefördert, während gleichzeitig Schwimmschlamm durch den Bandräumer 41 an den Beckenrand geleitet wird. Der Bandräumer 41 bildet somit sowohl ein Bodenräumwerk als auch ein Schwimmschlammräumwerk.

Der Antrieb des Bandräumers 41 kann mittels eines Getriebes (nicht dargestellt) über die Antriebseinheit 36 des Räumerarmes 37 erfolgen. Die Rotation des Räumerarmes 37 relativ zu dem ortsfesten Mittelbauwerk 35 wird dazu beispielsweise über einen an dem Mittelbauwerk 35 angeordneten Zahnkranz auf ein Kegelräder übertragen, die den Bandräumer 41 antreiben. Durch geeignete Wahl der Getriebeparameter kann die Geschwindigkeit des Bandräumers 41 so an die Rotationsgeschwindigkeit des Räumerarms 37 angepasst werden, dass bei einem Umlauf des Räumerarms 37 die gesamte Fläche des Beckens 32 von dem Bandräumer 41 überstrichen wird. Bei einer Umkehr der Bewegungsrichtung des Räumerarms 37 in dem Klärbecken 32 kann sichergestellt werden, dass der Bandräumer 41 unabhängig von der Bewegungsrichtung des Räumerarms 37 den Schlamm stets in die gleiche Richtung fördert.

Auf dem Beckenrand liegt eine Abdeckung 44 auf, die das Becken 32 vollständig überspannt. Diese Abdeckung kann das Entweichen von Gasen aus dem Becken 32 minimieren. Zur Be- oder Entlüftung des Beckens 32 sind Lüftungshauben 45 auf der Abdeckung 44 vorgesehen.

### Bezugszeichenliste

- 1: Rundbeckenräumer
- 2: Räumerarm
- 3: Klärbecken
- 4: Bodenräumwerk
- 5: Schwimmschlammräumwerk
- 6: zentrales Lager
- 7: äußeres Lager
- 8: Beckenboden
- 9: Schlammsammeltrichter
- 10: Überlauf
- 11: Wassereinlauf
- 12: Abwasserzulaufleitung
- 13: Schlammsammeltrichter
- 14: Abflussrohr
- 15: Bandräumer
- 16: Umlenkrolle
- 17: Umlenkrolle
- 18: Räumschild
- 19: Schottblech
- 20: Bandräumer
- 21: Umlenkrolle
- 22: Umlenkrolle
- 23: Umlenkrolle
- 24: Räumschild
- 25: Flüssigkeitsoberfläche
- 26: Rampe
- 27: Schottblech
- 28: Antriebseinheit
- 29: Steuervorrichtung
- 30: Kabel
- 31: Rundbeckenräumer
- 32: Klärbecken
- 33: Beckenboden
- 34: Schlammsammeltrichter
- 35: Mittelbauwerk
- 36: Antriebseinheit
- 37: Räumerarm
- 38: Arm
- 39: Führungsrolle
- 40: Führungsrolle
- 41: Bandräumer
- 42: Räumschild
- 43: Flüssigkeitsoberfläche
- 44: Abdeckung
- 45: Lüftungshaube

## Patentansprüche

1. Rundbeckenräumer, insbesondere für Klärbecken mit Belebtschlamm enthaltender Flüssigkeit, mit einem Räumerarm (2; 37), an dem wenigstens ein Räumwerk (4, 5) zum Austragen von Schlamm oder ähnlichem aus dem Klärbecken (3; 32) angeordnet ist, wobei der Räumerarm (2; 37) über eine Antriebseinheit (28; 36) um den Mittelpunkt des Klärbeckens (3; 32) rotierbar ist, **dadurch gekennzeichnet, dass** die Antriebseinheit (28; 36) eine Steuervorrichtung (29) aufweist, die die Bewegungsrichtung des Räumerarms (2; 37) nach maximal zwei Umdrehungen umkehrt.

2. Rundbeckenräumer nach Anspruch 1, **dadurch gekennzeichnet, dass** die Steuervorrichtung (29) die Bewegungsrichtung des Räumerarms (2; 37) nach etwa einer Umdrehung abwechselnd umkehrt.

3. Rundbeckenräumer nach einem der Ansprüche 1 oder 2, **dadurch gekennzeichnet, dass** die Steuervorrichtung (29) eine elektronische Steuerung zur Umkehr der Drehrichtung des Räumerarms (2; 37) umfasst.

4. Rundbeckenräumer nach einem der Ansprüche 1 oder 2, **dadurch gekennzeichnet, dass** die Steuervorrichtung (29) eine mechanische Steuerung zur Umkehr der Drehrichtung des Räumerarms (2; 37) umfasst.

5. Rundbeckenräumer nach einem der vorangegangenen Ansprüche, **dadurch gekennzeichnet, dass** an dem Räumerarm (2; 37) ein Bodenräumwerk (4) und ein Schwimmschlammräumwerk (5) angeordnet sind.

6. Rundbeckenräumer nach Anspruch 5, **dadurch gekennzeichnet, dass** das Bodenräumwerk (4) und das Schwimmschlammräumwerk (5) Bandräumer (15, 20) mit in radialer Richtung des Klärbeckens (3) umlaufenden Räumschilden (18, 24) aufweisen.

7. Rundbeckenräumer nach Anspruch 5, **dadurch gekennzeichnet, dass** das Bodenräumwerk (4) und das Schwimmschlammräumwerk (5) durch einen gemeinsamen Bandräumer (41) mit in radialer Richtung des Klärbeckens (32) umlaufenden Räumschilden (42) gebildet werden.

8. Rundbeckenräumer nach Anspruch 6 oder 7, **dadurch gekennzeichnet, dass** die Bandräumer (15, 20; 41) zweigeteilte Räumschilde (18, 24; 42) aufweisen, zwischen denen jeweils ein Schottblech (19, 27) angeordnet ist, das mit den Räumschilden (18, 24; 42) einen Winkel von etwa 90° bildet.

9. Rundbeckenräumer nach einem der vorangegangenen Ansprüche, **dadurch gekennzeichnet, dass** die Antriebseinheit (28; 36) und/oder die Räumwerke (4, 5) über wenigstens eine in der Mitte des Klärbeckens (3; 32) angeordnete flexible Leitung, insbesondere ein Kabel (30), mit einer Energiequelle verbunden sind.

10. Rundbeckenräumer nach Anspruch 9, **dadurch gekennzeichnet, dass** das Bodenräumwerk (4) und das Schwimmschlammräumwerk (5) einen gemeinsamen Antrieb aufweisen.

11. Rundbeckenräumer nach Anspruch 9 oder 10, **dadurch gekennzeichnet, dass** der Antriebseinheit (28; 36) des Räumerarms (2; 37) gleichzeitig das Bodenräumwerk (4) und das Schwimmschlammräumwerk (5) antreibt.

12. Rundbeckenräumer nach einem der vorangegangenen Ansprüche, **dadurch gekennzeichnet, dass** der Räumerarm (2; 37) aus einem modularen Stabfachwerk besteht.

13. Rundbeckenräumer nach einem der vorangegangenen Ansprüche, **dadurch gekennzeichnet, dass** der Räumerarm (37) am Beckenboden (8; 33) auf Führungsrollen (39, 40) gelagert ist, die dem Bodenräumwerk (4) nachlaufen.

14. Rundbeckenräumer nach einem der vorangegangenen Ansprüche, **dadurch gekennzeichnet, dass** der Räumerarm (2; 37) als Doppelbrücke ausgebildet ist, die den gesamten Durchmesser des Klärbeckens (3; 32) überspannt.
